(19) **Europäisches Patentamt**

**European Patent Office**

**Office européen des brevets**

(11) **EP 0 813 999 B1**

(12) **EUROPÄISCHE PATENTSCHRIFT**

(45) Veröffentlichungstag und Bekanntmachung des Hinweises auf die Patenterteilung:
**16.08.2000 Patentblatt 2000/33**

(51) Int Cl.$^7$: **B60R 21/00**

(21) Anmeldenummer: **97109104.6**

(22) Anmeldetag: **05.06.1997**

(54) **Zündkreis-Endstufe**

End-stage of an ignition circuit

Circuit de sortie pour allumage

(84) Benannte Vertragsstaaten:
**DE ES FR GB IT SE**

(30) Priorität: **19.06.1996 DE 19624357**

(43) Veröffentlichungstag der Anmeldung:
**29.12.1997 Patentblatt 1997/52**

(73) Patentinhaber: **TEMIC TELEFUNKEN microelectronic GmbH**
**90411 Nürnberg (DE)**

(72) Erfinder:
• **Fendt, Günter**
**86529 Schrobenhausen (DE)**

• **Hora, Peter**
**86529 Schrobenhausen (DE)**
• **Müller, Norbert**
**86529 Schrobenhausen (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(56) Entgegenhaltungen:
**EP-A- 0 577 988     DE-A- 2 021 475**

**Beschreibung**

Die **Erfindung betrifft** eine Zündkreis-Endstufe bei Insassen-Schutzsystemen gemäß dem Oberbegriff des Patentanspruchs 1.

In Kraftfahrzeugen befinden sich Auslösegeräte von Schutzeinrichtungen wie Gurtstraffer und Airbag-Systeme. Über einen Beschleunigungsaufnehmer werden die für eine Auslösung relevanten Daten über einen Analog- Digitalwandler in einem Mikroprozessor mit Speichereinrichtungen ausgewertet und gespeichert. Diese Informationen werden mit einer Zünd- und Netzwerkansteuerung, auch untereinander ausgetauscht und überprüft, um im Bedarfsfall die einzelnen Sicherheitssysteme zum richtigen Zeitpunkt auszulösen. Die Auslösung einer Schutzeinrichtung erfolgt in der Regel durch eine Zündpille, die über eine Zündkreis-Endstufe angesteuert wird. In der Zündpille befindet sich ein Draht, der sich bei Stromfluß erwärmt und so eine Zündung hervorruft. Nach heutigem Kenntnisstand sollen in Zukunft die Zündpillen der Gasgeneratoren infolge der Kostenreduktion direkt von der Autobatterie versorgt werden. Handelt es sich dabei um einen besonders sicherheitsrelevanten Gasgenerator wie z.B. der Fahrer-Airbag, so muß zusätzlich ein Sicherheits-Versorgungskondensator integriert sein, der bei einer Beschädigung der Autobatterie oder deren Zuleitung im Crash-Fall das System trotzdem mit Energie versorgt.

In der bisherigen Generation der Airbag-Steuergeräte sind die Zündkreis-Endstufen als "Durchschalte-Endstufen" realisiert. Unter einer Durchschalte-Endstufe versteht man eine Standard Zünd-Endstufe bei der im Zündfall zwei Schalter gleichzeitig geschlossen werden, so daß die Zündpille/en mit der ganzen, zur Verfügung stehenden Energie, versorgt wird/werden. Aus Kostengründen erfolgt hier die Zündung direkt aus der Bord-Batterie gelegentlich auch aus einem Reservekondensator. Dabei wird für jede sicherheitsrelevante Zündung ein separater Kondensator benötigt, weil die Entladung weder geregelt noch begrenzt wird. In zukünftigen Generationen von Airbag-Steuergeräte ist jedoch nur noch ein Reservekondensator für mehrere Generatoren vorgesehen. Daher werden für diese Systeme andere Zündkreis-Endstufen mit "geregelten und begrenzten Ausgangsstrom Betrieb" benötigt. In diesem Fall wird an jede Zündpille nur eine begrenzte Energiemenge geregelt abgegeben.

**Nachteilig an den** bisherigen Zündkreis-Endstufen ist jedoch, daß für jede Betriebsart (Endstufen-Betrieb bzw. geregelter und begrenzter Ausgangsstrom-Betrieb) eine andere Endstufe benötigt wurde.

**Der Erfindung liegt daher die Aufgabe zugrunde** mit nur einer Zündkreis-Endstufe verschiedene Betriebsarten zu realisieren.

**Diese Aufgabe wird erfindungsgemäß durch die Merkmale des Patentanspruchs 1 gelöst**. Hier können durch eine programmierbare Zündkreis-Endstufe die verschiedenen Betriebsarten eingestellt werden. Vorteilhafte Weiterbildungen der Erfindung ergeben sich aus den abhängigen Ansprüchen. Hierbei wird in die erfindungsgemäße Endstufe ein Abwärtswandler integriert.

**Die mit der Erfindung erzielten Vorteile bestehen** insbesondere darin, daß man sich mit einer programmierbaren Zündkreis-Endstufe an die jeweilige Situation bzw. Umgebung anpassen kann, so daß man die an das System gestellten Anforderungen, immer mit dem geringsten Aufwand an Mitteln realisieren kann. Wird für einen Zündkreis z.B. keine eigene Energiereserve gefordert, so wählt man aus wirtschaftlichen Gründen immer die kostengünstigere ungeregelte Zündung aus der Bord-Batterie. Mit der programmierbaren Endstufe, die beide Betriebsarten kann, läßt sich somit immer die günstigere Realisierung verwirklichen, ohne daß man verschiedene Endstufen ICs benötigt. Dadurch, daß man keine unterschiedlichen ICs benötigt, werden durch eine Erhöhung der Stückzahl die Kosten und der Aufwand reduziert.

Die Erfindung soll anhand der **Figur** erläutert werden.

**Figur** zeigt ein Beispiel einer erfindungsgemäßen Zündkreis-Endstufe. Diese besteht im wesentlichen aus einem Abwärtswandler, welcher durch eine entsprechende Logik **4** und der Zündschaltung **16** realisiert ist.

Die Eingänge **1, 2, 3** werden von einem oder mehreren Microprozessoren gesteuert. Bevor die Zündpille **14** durch einen entsprechend hohen Stromfluß-bzw. Spannungsimpuls überhaupt ausgelöst werden kann, müssen die beiden Leistungsschalter **9, 10** geschlossen werden. Dies geschieht indem am Eingang **1** ein HIGH-Signal für den ersten Leistungsschalter **10** und am Eingang **2** ein HIGH-Signal für den zweiten Leistungsschalter **9** unabhängig voneinander eingespeist werden. Am Steuereingang **3** können nun zwei verschieden Signale HIGH oder LOW eingespeist werden. Ein HIGH-Signal entspricht in der Beschreibung einer logischen EINS bzw. einem Aktiv-Signal. Ein LOW-Signal entspricht der logischen NULL.

Als Energiespeicher, der die Auslöseeinheit mit der benötigten Energie versorgt, kann sowohl die Bord-Batterie **15** als auch ein Kondensator **11** dienen.

**Fall 1**:

Am Steuereingang **3** der Ansteuerschaltung, die sich aus einer Logikeinheit **4**, einer UND-Verknüpfung **8** und einem Meßwiderstand **12** zusammensetzt, wird das Signal LOW angelegt.

Über die ODER-Verknüpfung **7** wird ein Signal nur dann an die nächst gelegene UND-Verknüpfung **8** weitergeleitet, wenn am anderen Eingang der ODER-Verknüpfung **7** ein HIGH-Signal anliegt. Liegt am anderen Eingang der UND-Verknüpfung **8** ebenfalls das Signal HIGH an, welches von Eingang **2** stammt und den Leistungsschalter **9** schließen soll, so wird das HIGH Signal an den Leistungsschalter **9** weitergeleitet, wodurch dieser geschlossen wird. Ist nun ebenfalls der Leistungsschalter **10** durch ein entsprechendes Signal am Eingang **1** geschlossen worden, so entlädt sich z.B. der auf 50V geladene Versorgungskondensator **11**. Durch den Widerstand **12** beginnt ein Strom zu fließen. Dieser Strom gelangt zum einen über eine Differenzverstärkerschaltung **6** in einen Schmitt-Trigger **5**.

Der Schmitt-Trigger **5** soll in dem hier aufgeführten Beispiel folgende Kennwerte haben:

$$U_{on} = 2\ V \quad => 1\ A$$
$$=> \varnothing = 2{,}5\ A$$
$$U_{off} = 8\ V \quad => 4\ A$$

Zum anderen wird mit diesem Strom in einer Spule **13** ein magnetisches Feld aufgebaut. Die Spule **13** dient hierbei als Energiezwischenspeicher.

Steigt nun der Durchschnittsstrom über 2,5 A auf 4 A an, so gibt der Schmitt-Trigger **5** ein LOW-Signal an die ODER-Verknüpfung **7** weiter. An der UND-Verknüpfung **8** liegt dann nur noch an einem Eingang ein HIGH-Signal an. Dies hat zur Folge, daß der Leistungsschalter **9** wieder geöffnet wird. Der Versorgungskondensator **11** bzw. die Bord-Batterie **15** wird nicht weiter entladen. Der Strom sinkt unter 2,5 A auf 1 A. Über den Differenzverstärker **6** wird dann der Schmitt-Trigger **5** wieder eingeschaltet, an der ODER-Verknüpfung **7** und an der UND-Verknüpfung **8** ein HIGH-Signal erzeugt und somit der Leistungsschalter **9** wieder aktiviert. Der Versorgungskondensator **11** bzw. die Bord-Batterie **15** entlädt sich wieder. Der Leistungschalter **9** wird getaktet. Durch das Takten des Leistungsschalters **9** wird der Durchschnittsstrom, der durch die Zündpille fließen kann auf z.B. 2,5 A geregelt. Das System läuft im geregeltem und begrenztem Ausgangsstrombetrieb. Über die Hilfskondensatoren **17** und **18** wird die Spannung an der Zündpille **14** erfaßt.

**Fall 2:**

Am Steuereingang **3** der Ansteuerschaltung, die sich aus einer Logikeinheit **4**, einer UND-Verknüpfung **8** und einem Meßwiderstand **12** zusammensetzt, wird das Signal HIGH angelegt.

Über die ODER - Verknüpfung **7** wird das HIGH-Signal von Eingang **3** immer, unabhängig von dem Signal am anderen Eingang dieser ODER-Verknüpfungen, an die UND-Verknüpfung **8** weitergeleitet. Liegt am anderen Eingang der UND-Verknüpfung **8** ebenfalls das Signal HIGH von Eingang **1** an, welches den Leistungschalter **9** schließen soll. Das HIGH Signal gelangt an den Leistungsschalter **9**, wodurch dieser geschlossen wird. Ist nun ebenfalls der Leistungsschalter **10** durch ein entsprechendes Signal am Eingang **1** geschlossen worden, so entlädt sich der Versorgungskondensator **11** ungeregelt, bzw. es fließt ein ungeregelter Strom aus der Bord-Batterie **15** in der Endstufe. Das System läuft im Durchschalte Endstufen-Betrieb. Es wird hierbei keine Induktivität **13** benötigt.

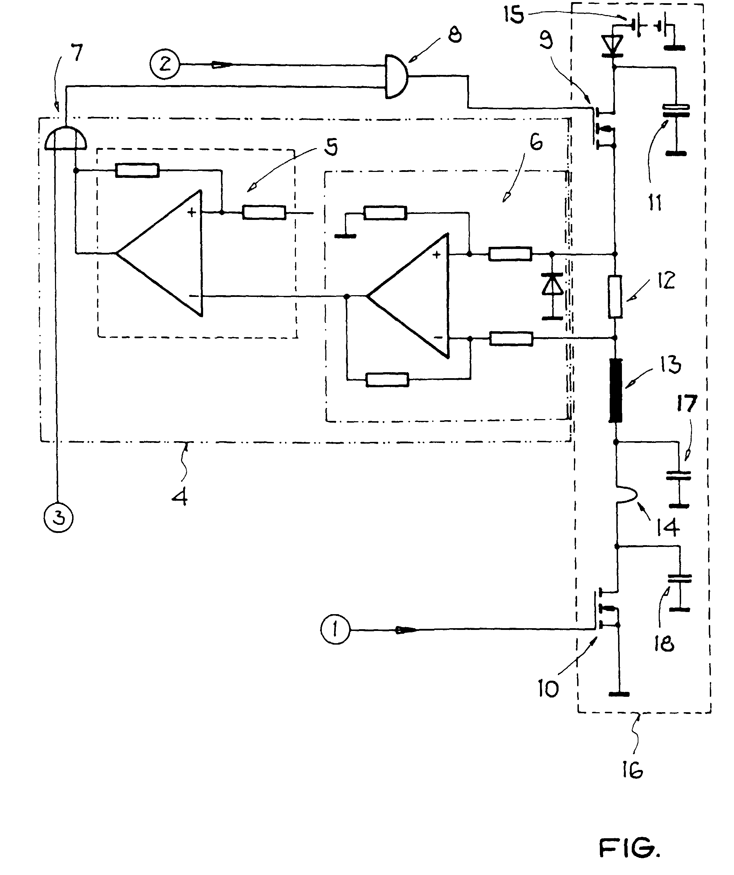

**Patentansprüche**

**1.** Zündkreis-Endstufe, die zur Auslösung von Insassen-Schutzsystemen für Kraftfahrzeuge dient,

- welche von einem oder mehreren Mikroprozessor/en angesteuert wird,
- deren Zündmittel (14) in einer Auslösesituation aus einem Energiespeicher insbesondere der Bord-Batterie (15) oder einem Kondensator (11) mit der Auslöseenergie versorgt wird, und welche
- einen Schalter (9) zwischen Energiespeicher (11, 15) und Zündmittel (14) aufweist,

**dadurch gekennzeichnet, daß** die Zündkreis-Endstufe eine programmierbare Ansteuerschaltung (4, 8, 12) beinhaltet, mit welcher der Schalter (9) wahlweise,

- geöffnet wird, um das Zündmittel (14) vom Energiespeicher (11, 15) abzutrennen und eine Zündung zu verhindern, oder
- geschlossen wird, um das Zündmittel (14) durch eine ungeregelte Entladung des Energiespeichers (11, 15) zu zünden, oder
- getaktet wird, um das Zündmittel (14) durch eine geregelte und damit begrenzte Entladung des Energiespeichers (11, 15) zu zünden.

**2.** Zündkreis-Endstufe nach Patentanspruch 1, **dadurch gekennzeichnet, daß** die Zündkreis-Endstufe einen Abwärtswandler (4, 16) beinhaltet, mit dem die Spannung aus dem Energiespeicher (11, 15), herab geregelt wird.

**3.** Zündkreis-Endstufe, nach Patentanspruch 1, **dadurch gekennzeichnet, daß** die Zündkreis-Endstufe mindestens einen programmierbaren Eingang (3) aufweist an dem die Betriebsart, also die Art der Entladung des Energiespeicher (11, 15), zur Zündung der Zündmittel (14) festgelegt wird.

**Claims**

**1.** Ignition circuit output stage, which serves to trigger passenger protection systems for motor vehicles,

- which is controlled by one or more microprocessor(s),
- the ignition means (14) of which is supplied with the trigger energy in a trigger situation from an energy store, in particular the vehicle's battery (15) or a capacitor (11), and which
- comprises a switch (9) between the energy store (11, 15) and the ignition means (14),

characterised in that the ignition circuit output stage includes a programmable control circuit (4, 8, 12), by which the switch (9) is selectively

- opened, in order to isolate the ignition means (14) from the energy store (11, 15) and prevent ignition, or
- closed, in order to ignite the ignition means (14) through an unregulated discharge of the energy store (11, 15), or
- clocked, in order to ignite the ignition means (14) through a regulated and thus limited discharge of the energy store (11, 15).

**2.** Ignition circuit output stage according to Claim 1, characterised in that the ignition circuit output stage includes a step-down converter (4, 16), by which the voltage from the energy store (11, 15) is regulated downwards.

**3.** Ignition circuit output stage according to Claim 1, characterised in that the ignition circuit output stage comprises at least one programmable input (3) at which the operating mode, i.e. the type of discharge of the energy store (11, 15), for igniting the ignition means (14) is determined.

**Revendications**

**1.** Etage final du circuit d'allumage qui sert au déclenchement de systèmes de protection des occupants pour des véhicules à moteur,

- qui est commandé par un ou plusieurs microprocesseur/s,
- dont l'agent d'allumage (14) en situation de déclenchement, est alimenté en énergie de déclenchement à partir d'un accumulateur d'énergie, en particulier de la batterie de bord (15)ou d'un condensateur (11), et qui présente un commutateur (9) entre accumulateur d'énergie (11, 15) et agent d'allumage (14),
- caractérisé par le fait que l'étage final de circuit d'allumage contient un circuit de commande programmable (4, 8, 12) avec lequel le commutateur (9), au choix,
- s'ouvre, pour séparer l'agent d'allumage (14) d'avec l'accumulateur d'énergie (11, 15) et interdire un allumage, ou
- se ferme pour allumer l'agent d'allumage (14) par une décharge non régulée de l'accumulateur d'énergie (11, 15), ou
- est activé en cadence pour allumer l'agent d'allumage (14) par une décharge régulée, et donc limitée, de l'accumulateur d'énergie (11, 15).

**2.** Etage final de circuit d'allumage selon la revendication 1, caractérisé par le fait que l'étage final de circuit d'allumage contient un transducteur abaisseur (4, 16) avec lequel la tension fournie par l'accumulateur d'énergie (11, 15) est régulée dans le sens d'un abaissement.

**3.** Etage final de circuit d'allumage selon la revendication 1, caractérisé par le fait que l'étage final de circuit d'allumage présente au moins une entrée programmable (3) à laquelle on prescrit le mode de fonctionnement, c'est-à-dire le type de décharge de l'accumulateur d'énergie (11, 15) pour l'allumage de l'agent d'allumage (14).

FIG.